# EUROPÄISCHE PATENTSCHRIFT

(11) **EP 2 812 203 B1**
(45) Veröffentlichungstag und Bekanntmachung des Hinweises auf die Patenterteilung: **18.10.2017**
(21) Anmeldenummer: 13703329.6
(22) Anmeldetag: 01.02.2013
(51) Int. Cl.: B60K 37/06, B60W 50/08, B60W 50/12, B60W 50/16, G05D 1/02, G05G 1/08, G05G 1/10, G05G 1/58

(54) **KRAFTWAGEN MIT EINER FAHRERASSISTENZEINRICHTUNG UND VERFAHREN ZUM BETREIBEN EINES KRAFTWAGENS**
AUTOMOBILE VEHICLE HAVING A DRIVER ASSISTANCE DEVICE AND METHOD FOR OPERATING AN AUTOMOBILE VEHICLE
VÉHICULE AUTOMOBILE COMPRENNANT UN DISPOSITIF D'ASSISTANCE DU CONDUCTEUR ET PROCÉDÉ POUR OPÉRÉR UN VÉHICULE AUTOMOBILE

(30) Priorität: 06.02.2012 DE 102012002305
(43) Veröffentlichungstag der Anmeldung: 17.12.2014
(73) Patentinhaber: Audi AG, 85045 Ingolstadt (DE)
(72) Erfinder: WIMMER, Martin, 93049 Regensburg (DE); SIEDERSBERGER, Karl-Heinz, 86669 Königsmoos (DE); SACHER, Heike, 80797 München (DE); EHRHART, Franziska, 85055 Ingolstadt (DE); SCHEIFFERT, Fabian, 71384 Weinstadt (DE)
(74) Vertreter: Herbst, Matthias Heinz
(86) Internationale Anmeldenummer: PCT/EP2013/000302
(87) Internationale Veröffentlichungsnummer: WO 2013/117309

(56) Entgegenhaltungen:
- EP-A1- 1 980 441
- DE-A1-102007 029 594
- DE-A1-102010 022 433
- DE-A1-102010 032 358
- DE-A1-102010 053 889
- DE-C1- 19 548 717
- DE-C2- 4 120 975

## Beschreibung

Die Erfindung betrifft einen Kraftwagen mit einem Fahrerassistenzsystem, welches dazu ausgelegt ist, den Kraftwagen selbständig während einer Fahrt des Kraftwagens zu führen. Der Begriff "Führen des Kraftwagens" umfasst hierbei zum einen das Lenken des Kraftwagens (Folgen eines Straßenverlaufs, Ausrichten des Kraftwagens innerhalb einer Spur, Spurwechselmanöver), was auch als Querführung bezeichnet wird, und zum anderen das Steuern der Fahrgeschwindigkeit des Kraftwagens (Beschleunigen, Bremsen, Notbremsen, Anhalten, Beibehalten der Geschwindigkeit), was auch als Längsführung bezeichnet wird. Zu der Erfindung gehören auch ein Kraftwagen und ein Verfahren zum Betreiben eines Kraftwagens, durch welches eine Bedienung des Fahrerassistenzsystems ermöglicht wird.

Ein Fahrerassistenzsystem der genannten Art ist aus der DE 10 2010 022 433 A1 bekannt. Danach kann ein Fahrerassistenzsystem in einem vollautomatischen Assistenzmodus die Führung des Fahrzeugs vollständig selbstständig ausführen. Der Fahrer des Kraftwagens muss dann während der Fahrt weder das Lenkrad noch die Pedalen des Kraftwagens bedienen und kann daher für eine verhältnismäßig lange Zeitdauer seine Aufmerksamkeit anderen Dingen widmen, wie beispielsweise der Bedienung eines Infotainmentsystems.

Das Dokument DE 10 2007029594 A1 offenbart eine Gangwahlvorrichtung sowie ein Verfahren zur Auswahl einer einem Fahrmodus eines Kraftfahrzeugs zugeordneten Funktion, wobei ein Informationssignal von einer Informationsausgabeeinrichtung ausgebbar ist, mittels welchem einem Fahrer zumindest eine von einer aktuellen Fahrsituation abhängig verfügbare und über die Gangwahlvorrichtung aktivierbare Funktion signalisierbar ist.

Unter einem selbständigen Führen des Kraftwagens ist im Zusammenhang mit der Erfindung aber auch ein teilautomatischer Assistenzmodus zu verstehen, bei welchem der Grad der Selbständigkeit des Fahrerassistenzsystems bei der Führung des Kraftwagens verringert ist und welcher dann beispielsweise lediglich in der Funktionalität bestehen kann, die Fahrgeschwindigkeit des Kraftwagens auf eine Soll- oder Setzgeschwindigkeit einzuregeln, welche der Fahrer durch Einstellen eines Werts des entsprechenden Fahrparameters des Fahrerassistenzsystems vorgibt (Fahrgeschwindigkeitsregelung).

Ein weiterer wünschenswerter Assistenzmodus ist die autonome Führung des Kraftwagens durch eine Fahrerassistenzeinrichtung. Im Unterschied zum vollautomatischen Assistenzmodus wird im autonomen Assistenzmodus durch die Fahrerassistenzeinrichtung auch darüber entschieden, welche Werte bei den Fahrparametern (Sollabstände, Sollgeschwindigkeit) für ein momentan ausgeführtes Fahrmanöver und/oder welche Fahrmanöver (Spurwechsel, Abbiegen, Einparken und dergleichen) auszuführen sind. Im vollautomatischen Assistenzmodus ist dagegen vorgesehen, dass der Fahrer über eine Benutzerschnittstelle vorgibt, welche Fahrmanöver auszuführen sind bzw. welche Abstände und Geschwindigkeiten bei einem momentan ausgeführtes Fahrmanöver durch die Fahrerassistenzeinrichtung beim Befahren einer Fahrspur eingeregelt werden sollen. Ein anderer Unterschied zwischen den beiden Assistenzmodi kann darin bestehen, wie die Fahrerassistenzeinrichtung bei einer unvorhergesehenen Entwicklung des Verkehrsgeschehens reagiert, wenn also eine sichere Führung durch die Fahrerassistenzeinrichtung nicht mehr gewährleistet ist. Im vollautomatischen Assistenzmodus ist dann vorgesehen, dass sich die Fahrerassistenzeinrichtung deaktiviert und die Kontrolle über den Kraftwagen an den Fahrer abgibt, während dagegen im autonomen Assistenzmodus der Kraftwagen durch die Fahrerassistenzeinrichtung selbst in einen sicheren Zustand gebracht wird, indem der Kraftwagen z.B. angehalten wird.

Je nach momentan aktivem Assistenzmodus werden während der Fahrt bestimmte Führungsaufgaben von dem Kraftwagen selbständig durchgeführt, d.h. ohne ein Zutun des Fahrers. Hierbei muss aber für jeden Assistenzmodus, in welchem die Fahrerassistenzeinrichtung betreibbar ist, sichergestellt sein, dass dem Fahrer stets klar ist, bis zu welchem Grad das Fahrerassistenzsystem den Kraftwagen überwacht und führt, welche Eingriffsmöglichkeiten dem Fahrer selbst beim Führen des Kraftwagens noch gegeben sind und welche Führungsaufgaben der Fahrer zwingend selbst ausführen muss. Verliert der Fahrer hierbei die Übersicht, kann es zu einer Gefährdung seiner Sicherheit kommen. Wähnt der Fahrer beispielsweise die Fahrerassistenzeinrichtung im vollautomatischen Assistenzmodus und lässt er deshalb das Lenkrad los, um sich mit dem Infotainmentsystem zu beschäftigen, kann hierbei das Fahrzeug von der Fahrbahn abkommen, weil die Fahrerassistenzeinrichtung z.B. überhaupt nicht aktiviert ist, das heißt eine vollständig manuelle Fahrweise von dem Fahrer verlangt ist (hier deshalb als manueller Assistenzmodus bezeichnet).

Das Spektrum der von der manuellen Fahrt über die Teil- und Vollautomation bis hin zur Autonomie reichenden Selbständigkeit der Fahrerassistenzeinrichtung (Automationsspektrum) soll in seiner Komplexität künftig für den Nutzer transparent und verständlich bedienbar sein. Eine handhabbare Komplexität dieser vier genannten Assistenzmodi, eine klare Abgrenzbarkeit der einzelnen Assistenzmodi sowie charakteristische Bedienmodalitäten innerhalb der einzelnen Assistenzmodi sind wichtige Eigenschaften zukünftiger Bedienkonzepte. Während für die Teilautomation (z.B. Fahrgeschwindigkeitsregelung, Active-Lane-Control, d.h. Spurhalteassistenz) etablierte Bedienelemente wie Tasten, Lenkrad oder Hebel zur Verfügung stehen, gibt es für die prototypische Bedienung der Vollautomation und der Autonomie bisher lediglich konzeptionelle Ansätze. Diese Ansätze sind häufig lediglich Ergänzungen beziehungsweise Erweiterungen bestehender Bedienkonzepte und stellen isolierte Insellösungen dar. Solche Insellösungen erschöpfen sich in der Regel in bloßer Funktionsintegration in bestehende Bedienelemente, was zu einer Vergrößerung der Funktionsdichte der einzelnen Bedienelemente führt und so aufgrund der Vielfalt und Komplexität der hieraus resultierenden Bedieneinrichtungen nicht zielführend ist. Die Handhabbarkeit und Funktionsvielfalt aktueller Bedienelemente ist bereits ausgereizt.

Eine Aufgabe der vorliegenden Erfindung ist es, bei einem Kraftwagen mit einer Fahrerassistenzeinrichtung, das den Kraftwagen ganz oder teilweise selbständig führen kann, die Übersichtlichkeit bei deren Bedienung zu gewährleisten.

Die Aufgabe wird durch einen Kraftwagen gemäß Patentanspruch 1 sowie ein Verfahren gemäß Patentanspruch 12 gelöst. Vorteilhafte Weiterbildungen des erfindungsgemäßen Kraftwagens sind durch die Unteransprüche gegeben.

Bei dem erfindungsgemäßen Kraftwagen weist die Fahrerassistenzeinrichtung eine Bedieneinrichtung mit mehreren Bedienelementen auf. In Abhängigkeit von dem momentan aktiven Assistenzmodus können über die Bedienelemente Fahrparameter der Fahrerassistenzeinrichtung eingestellt werden, welche das Führverhalten der Fahrerassistenzeinrichtung festlegen, also etwa ein Sollabstand zu einem vorausfahrenden Fahrzeug, eine Sollgeschwindigkeit in einem teilautomatischen Assistenzmodus. Unter einem Bedienelement ist im Zusammenhang mit der Erfindung ganz allgemein z.B. eine einzelne Taste, ein Schalter, Wippschalter, ein Drehrad, ein Touchpad, ein Touchscreen, eine kapazitive Sensortaste oder eine andere Schalteinrichtung gemeint, mittels welcher ein Schaltzustand durch Berühren einer dafür vorgesehenen Fläche oder durch Drücken einer solchen Fläche oder durch Annähern eines Fingers an eine solche Fläche verändert werden kann.

Die Bedieneinrichtung ist als Handballenablage ausgestaltet und weist hierzu einen Auflagekörper für eine Handfläche eines Benutzers der Bedieneinrichtung auf, der in einem primären Greifraum des Fahrers angeordnet ist. Unter einem primären Greifraum ist hier allgemein derjenige Bereich des Kraftwagens zu verstehen, den der Fahrer in einer entspannt zurückgelehnten Haltung vom Fahrersitz aus mit einer Hand erreichen kann, also etwa die Mittelkonsole oder die Fahrertür des Kraftwagens. Der Auflagekörper weist nun zwei Besonderheiten auf. Zum einen sind an dem Auflagekörper mehrere der Bedienelemente der Bedieneinrichtung angeordnet. Zum anderen ist der Auflagekörper um eine Hochachse drehbar gelagert. Die Fahrerassistenzeinrichtung ist dabei dazu ausgelegt, den momentan aktiven Assistenzmodus in Abhängigkeit von einer Drehstellung des Auflagekörpers einzustellen.

Der Auflagekörper kann beispielsweise als flacher Knauf oder als Barren ausgestaltet sein, auf den der Fahrer während der Fahrt eine freie Hand ablegen kann. Möchte der Fahrer dann nicht alle Führaufgaben selbst übernehmen, sondern etwa eine Fahrgeschwindigkeitregelung aktivieren, so kann er den Auflagekörper entsprechend drehen, was dann den teilautomatischen Assistenzmodus aktiviert. Gleichzeitig wird durch die veränderte Drehstellung auch die relative Lage der einzelnen Bedienelemente, also von Tasten und der gleichen, die sich auf dem Ablagekörper befinden, bezüglich des Fahrers verändert. Mit anderen Worten sind nun diejenigen Bedienelemente, die zum Bedienen des eingestellten Assistenzmodus benötigt werden, so positioniert, dass sie sich nahe an den Fingerspitzen der auf dem Ablagekörper abgelegten Hand befinden. So kann der Fahrer sie ohne suchendes Herumtasten direkt erreichen und sich sicher sein, dass er die richtigen Tasten für die Bedienung verwendet.

Das Konzept Handballenablage bildet somit einen integrativen Ansatz, der die Bedienung des Automationsspektrums, das von manueller Fahrt über eine Teil- und eine Vollautomation bis hin zur Autonomie reichen kann, in eine einzige Bedieneinrichtung integriert. Das Aussehen des Auflagekörpers sowie die bedienbare Funktionalität der einzelnen Bedienelemente sind variabel und abhängig von aktuell gewählten Assistenzmodus adaptierbar.

Mittels eines drehbaren Auflagekörpers kann auch erreicht werden, dass ein Bedienelement, welches neben dem Auflagekörper im primären Greifraum angeordnet ist, abhängig von der Drehstellung des Auflagekörpers bedienbar ist oder nicht. Hierzu weist erfindungsgemäß der Auflagekörper wenigstens ein Flügelelement auf, welches dieses Bedienelement abhängig von der Drehstellung des Auflagekörpers verdeckt. Hierdurch wird verhindert, dass die Bedienperson dazu verleitet wird, das Bedienelement in einem Assistenzmodus zu bedienen, in welchem es ohne Funktion ist.

Erfindungsgemäß ist auf wenigstens einem Flügelelement selbst ein Bedienelement angeordnet. Das Bedienelement wird dabei in der Weise angeordnet, dass es sich in derjenigen Drehstellung des Auflagekörpers, in welcher das Flügelelement das neben dem Auflagekörper angeordnete Bedienelement verdeckt, über eben diesem Bedienelement befindet. Hierdurch ergibt sich der Vorteil, das je nach momentan aktivem Assistenzmodus entweder die neben dem Auflagekörper befindliche Taste oder die auf dem Flügelelement befindliche Taste in einer für den Bediener einfach zu erreichenden, ergonomisch günstigen Position bereitgestellt werden kann.

Um die Veränderung der relativen Lage eines Bedienelements bezüglich des Fahrers beim Drehen des Auflagekörpers besonders deutlich wahrnehmbar zu machen, ist zweckmäßiger Weise vorgesehen, dass dieses Bedienelement an einem Außenumfang des Auflagekörpers angeordnet ist, wobei dieser Außenumfang in einer Ebene senkrecht zur Hochachse des Kraftwagens gebildet ist. Da der Auflagekörper um seine Hochachse drehbar ist, ergibt sich somit für ein solches am Außenumfang angeordnetes Bedienelement bei gegebener Winkelveränderung der Drehlage des Auflagekörpers die größte örtliche Verschiebung des Bedienelements. So können auch große Bedienelemente, wie etwa Wippschalter, eine für den Bediener deutlich wahrnehmbare Lageänderung erfahren.

Neben einer Drehbarkeit des Auflagekörpers kann auch vorgesehen sein, dass der Auflagekörper in einer Innenverkleidung des Kraftwagens versenkbar und wieder aus dieser ausfahrbar gelagert ist. Das Versenken und das Ausfahren ist dann von dem Benutzer durch Drücken auf den Auflagekörper auslösbar. Mit auslösbar ist hierbei gemeint, dass der Auflagekörper entweder manuell vom Benutzer in die Konsole hineingedrückt werden muss oder dass ein Aktor (etwa ein Elektromotor) bereitgestellt ist, der durch Drücken einer Taste auf dem Auflagekörper aktiviert wird und der dann den Auflagekörper in die Konsole verfährt oder aus dieser wieder herausbefördert. Bei dieser Weiterbildung mit versenkbarem Auflagekörper ist die Fahrerassistenzeinrichtung dann dazu ausgelegt, jeweils zusammen mit dem Versenken bzw. dem Ausfahren auch dem momentan aktiven Assistenzmodus zu wechseln. Hierdurch ergibt sich der Vorteil, dass der Auflagekörper immer dann aus dem Zugriffsbereich des Benutzers entfernt sein kann, wenn sich die Fahrerassistenzeinrichtung in einem Assistenzmodus befindet, in welchem eine Bedienung über die Bedienelemente des Auflagekörpers nicht vorgesehen ist.

Zweckmäßigerweise ist der Auflagekörper in der versenkten Stellung durch einen Aktor oder durch eine sogenannte Push-Push-Verriegelung gehalten. Letztere ist beispielsweise von Kugelschreibern bekannt, bei denen ebenfalls durch wiederholtes Drücken eines Knopfes (Push-Push) eine Ver- und Endriegelung erreichbar ist. In der Bedieneinrichtung wäre der zu drückende Knopf dabei dann der Auflagekörper selbst.

Eine andere vorteilhafte Weiterbildung ergibt sich, wenn nicht nur die Bedienelemente an dem Auflagekörper und neben dem Auflagekörper zum Bedienen der Fahrerassistenzeinrichtung ausgelegt sind, sondern auch der Auflagekörper selbst. Hierzu kann vorgesehen sein, dass der Auflagekörper in zumindest einer Drehstellung durch rotatorisches Auslenken (also etwa durch Kippen um einen Fußpunkt) und/oder durch translatorisches Auslenken quer zu einer Hochachse des Kraftwagens auslenkbar ausgestaltet ist. Um hierbei eine Bedienmöglichkeit für die Fahrerassistenzeinrichtung zu schaffen, ist diese dann dazu ausgelegt, den Auflagekörper als Steuerhebel zum Bedienen der Fahrerassistenzeinrichtung zu betreiben. Mit anderen Worten kann der Auflagekörper z.B. wie ein "Joystick" betrieben werden. Der Auflagekörper ist zum Bedienen der Fahrerassistenzeinrichtung bevorzugt monostabil auslenkbar, so dass er sich selbständig wieder in die Ausgangsstellung zurückbewegt. Dieses Auslenken zum Bedienen ist hier zu unterscheiden von Drehung um die Hochachse, um zwischen zwei Assistenzmodi umzuschalten.

Im Zusammenhang mit einem auslenkbar ausgestalteten Auflagekörper hat es sich des Weiteren als zweckmäßig erwiesen, wenn die Bedieneinrichtung zusätzlich einen Aktor aufweist, welcher dazu ausgelegt ist, an dem Auflagekörper eine Kraft-Weg-Kennlinie einzustellen. Durch Vorgabe einer Kraftsenke oder einer mit zunehmender Auslenkung größer werdenden Rückstellkraft kann so dem Benutzer der Bedieneinrichtung beispielsweise ein besonders günstiger Wert für einen Fahrparameter oder eine bei weiterer Aussteuerung des Fahrparameters zunehmende Gefahr vermittelt werden. Der Benutzer muss hierbei dann nicht einmal den Blick vom Verkehr abwenden, um ihn beispielsweise auf eine Anzeige richten und so die Gefahr erkennen zu können.

Ähnlich wie bei einer Kraft-Weg-Kennline kann es auch zweckmäßig sein, an dem Auflagekörper eine Kraftrückkopplung für den Benutzer zu erzeugen. Hierbei wird dann der Auflagekörper aktiv durch einen Aktor der Federeinrichtung in eine Richtung ausgelenkt und so beispielsweise die Hand des Benutzers beim Einstellen eines günstigen Werts für einen Fahrparameter geführt. Durch eine Vibration kann der Benutzer z.B. gewarnt werden. Genauso können Parameter aus einer Umfeldwahrnehmung (Bildverarbeitung auf der Grundlage einer Kamera bzw. eines Radars) an den Benutzer kommuniziert werden.

Die beschriebene Bedieneinrichtung mit drehbar gelagertem Ablagekörper ist sehr flexibel verwendbar. Sie kann zur Bedienung einer Fahrerassistenzeinrichtung in einer großen Vielzahl unterschiedlicher Assistenzmodi verwendet werden. So sieht eine Ausführungsform des erfindungsgemäßen Kraftwagens vor, das die Fahrerassistenzeinrichtung dazu ausgelegt ist, in einem teilautomatischen Assistenzmodus den Kraftwagen teilautomatisiert auf der Grundlage von Fahrparametern zu führen, die mittels der Bedieneinrichtung von dem Benutzer einstellbar sind, also beispielsweise eine Setzgeschwindigkeit oder ein Sollabstand zu einem vorausfahrendem Fahrzeug im Zusammenhang mit einer Fahrgeschwindigkeitsregelung. Der hier beschriebene teilautomatische Assistenzmodus zeichnet sich dabei dadurch aus, dass durch Beibehalten einer entsprechenden mechanischen oder elektromechanischen Kopplung ermöglicht ist, dass ein Fahrer des Kraftwagens mittels einer Lenkhandhabe, also etwa einem Lenkrad, und/oder eines Pedals stets direkt den Kraftwagen auch selbst führen kann. Die Führung des Kraftwagens durch den Fahrer und die Führung durch das Fahrerassistenzsystem geschehen also parallel zueinander, indem die einzelnen Führungshandlungen überlagert werden.

Ein weiterer zweckmäßiger Assistenzmodus ist der vollautomatische Assistenzmodus, in welchem der Kraftwagen durch die Fahrerassistenzeinrichtung vollständig automatisiert durch eine selbständige Längs- und Querführung geführt wird. Über eine Benutzerschnittstelle kann ein von der Fahrerassistenzvorrichtung auszuführendes Fahrmanöver ausgewählt und/oder ein Fahrparameter eines aktuell durchgeführten Fahrmanövers eingestellt werden. Mit einem Fahrmanöver ist hier beispielsweise ein Überholen eines vorausfahrenden Fahrzeugs, ein Spurwechsel, ein Abbiegen in eine andere Straße und das Einparken des Kraftwagens zu verstehen, also all diejenigen Führungshandlungen, die einen Fahrspurwechsel implizieren. Im vollautomatischen Assistenzmodus gibt der Fahrer also über die Bedieneinrichtung nur vor, wie der Kraftwagen durch die Fahrerassistenzeinrichtung geführt werden soll. Das Führen an sich übernimmt die Fahrerassistenzeinrichtung nach Erhalt der Vorgabe selbst. Hierbei bleiben das Lenkrad und die Pedalerie für eine Übernahme oder einen kurzzeitigen Eingriff verfügbar. Bei der Benutzerschnittstelle kann es sich z.B. um diejenige handeln, die von der Anmelderin zusammen mit der vorliegenden Anmeldung am selben Tag zum Patent angemeldet wurde.

Wird zudem auch die Entscheidung darüber, welcher Wert für einen Fahrparameter eingestellt werden soll, durch die Fahrerassistenzeinrichtung selbst getroffen, so ergibt sich der autonome Assistenzmodus, in welchem der Fahrer dann keine Vorgaben mehr über die Bedieneinrichtung machen muss. Dieser autonome Assistenzmodus ist besonders geeignet, wenn dem Fahrer beispielsweise in einem Stau die Möglichkeit gegeben werden soll, Zeitung zu lesen oder sich mit einem Infotainmentsystem zu beschäftigen und hierbei den Blick für unbestimmte Zeit vom Verkehrsgeschehen abzuwenden.

Eine besonders bevorzugte Ausführungsform des erfindungsgemäßen Kraftwagen sieht vor, das ein Benutzer der Bedieneinrichtung folgende Abfolge von Bedienschritten mittels des Auflagekörpers durchführen kann. Ersten: Ausfahren des Auflagekörpers aus der Innenverkleidung, indem beispielsweise ein entsprechender Aktor aktiviert oder eine Push-Push-Verriegelung durch Drücken auf den Auflagekörper gelöst wird. Zweitens: Drehen des Auflagekörpers um einen vorbestimmten Winkel um dessen Hochachse, sodass sich hierbei bezüglich des Fahrers die Lage zumindest einiger auf dem Auflagekörper befindlicher Bedienelemente verändert. Drittens: Als letzter Bedienschritt der Folge ist dann das Versenken des Auflagekörpers in der Innenverkleidung vorgesehen.

Bei jedem dieser drei Bedienschritte wird auch der Assistenzmodus in der Fahrerassistenzeinrichtung gewechselt. Hierbei befindet sich die Fahrerassistenzeinrichtung ursprünglich in einem manuellen Assistenzmodus, der gar keine Führung des Kraftwagens durch die Fahrerassistenzeinrichtung vorsieht. Durch Ausfahren des Auflagekörpers aus der Innenverkleidung wird dann der teilautomatische Assistenzmodus aktiviert, welcher zumindest eine Fahrgeschwindigkeitregelung vorsieht. Durch Drehen des Auflagekörpers wird von dem teilautomatischen Assistenzmodus in einem vollautomatischen Assistenzmodus gewechselt, welcher eine selbstständige Längs- und Querführung des Kraftwagens durch die Fahrerassistenzeinrichtung vorsieht. Indem der Benutzer anschließend den Auflagekörper wieder in der Innenverkleidung versenkt, wird ein autonomer Assistenzmodus aktiviert, der eine vollständig selbständige Führung des Kraftwagen vorsieht. Die beschriebene Abfolge von Bedienschritt ermöglicht es dem Benutzer also, den Grad der Selbstständigkeit in der Fahrerassistenzeinrichtung beim Führen des Kraftwagens schrittweise in einer übersichtlichen Weise zu erhöhen. Zugleich ist dem Benutzer durch die versenkte Stellung des Auflagekörpers in manuellem und im autonomen Assistenzmodus deutlich vermittelt, dass er in diesen Assistenzmodi keinen Einfluss auf die Fahrerassistenzeinrichtung über die Bedienelemente hat, sodass eine unnötige Fehlbedienung ausgeschlossen ist.

Das erfindungsgemäße Konzept "Handballenablage" wird auch durch das erfindungsgemäße Verfahren zum Betreiben eines Kraftwagens umgesetzt. Gemäß dem Verfahren wird während der Fahrt des Kraftwagens eine Veränderung der Lage des Auflagekörpers durch die Fahrerassistenzeinrichtung erfasst und in Abhängigkeit von der erfassten Veränderung ein Assistenzmödus der Fahrerassistenzeinrichtung eingestellt. Zugleich wird zumindest eine in dem dann eingestellten Assistenzmodus von der Fahrerassistenzeinrichtung bereitgestellte Funktionalität einem der Bedienelemente der Bedieneinrichtung zugeordnet, sodass durch Betätigen dieses Bedienelements die Funktionalität aktivierbar ist. Mit anderen Worten werden die einzelnen Bedienelemente in Abhängigkeit vom momentan aktiven Assistenzmodus mit unterschiedlichen Funktionalitäten belegt bzw. gegebenenfalls auch deaktiviert, wenn sie nicht benötigt werden.

Zu der Erfindung gehören auch Weiterbildungen des erfindungsgemäßen Verfahrens, die Merkmale aufweisen, welche Merkmalen der bereits geschriebenen Weiterbildungen des erfindungsgemäßen Kraftwagens entsprechen. Aus diesem Grund sind die Weiterbildungen des erfindungsgemäßen Verfahrens hier nicht noch einmal beschrieben.

Die Erfindung wird im Folgenden anhand von Ausführungsbeispielen noch einmal konkreter erläutert. Dazu zeigt:
- Fig. 1: eine schematische Darstellung einer Mittelkonsole einer Ausführungsform des erfindungsgemäßen Kraftwagens in perspektivischer Ansicht,
- Fig. 2: eine schematische Darstellung einer Handballenablage der Mittelkonsole von Figur 1 in perspektivischer Ansicht,
- Fig. 3: eine schematische Darstellung einer Draufsicht auf die Handballenablage von Figur 2, wobei die Handballenablage in zwei unterschiedlichen Drehstellungen gezeigt ist,
- Fig. 4: eine schematische Darstellung einer Draufsicht auf die Mittelkonsole von Figur 1,
- Fig. 5: eine schematische Darstellung einer Mittelkonsole einer weiteren Ausführungsform des erfindungsgemäßen Kraftwagens in perspektivischer Ansicht und
- Fig. 6: eine schematische Darstellung einer Handballenablage der Mittelkonsole von Figur 5 in perspektivischer Ansicht.

Die Beispiele stellen bevorzugte Ausführungsformen der Erfindung dar.

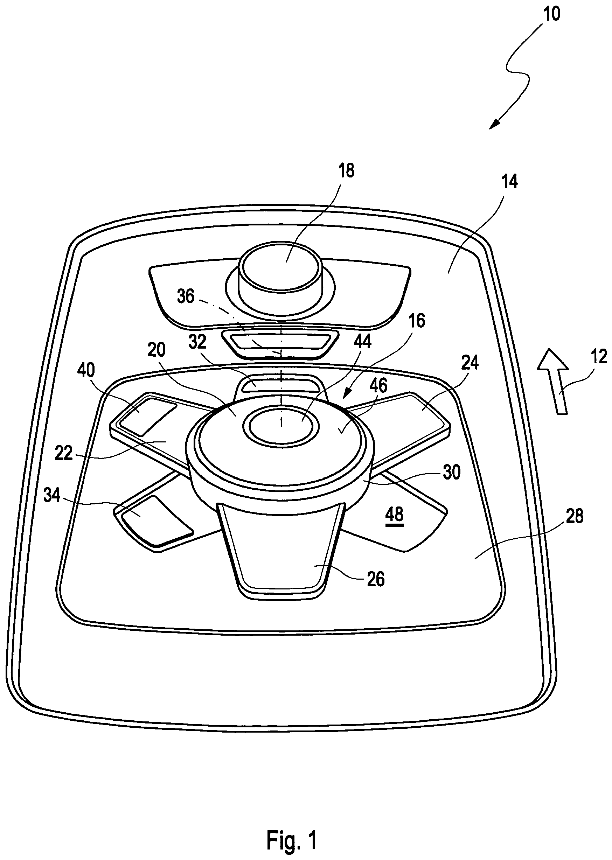

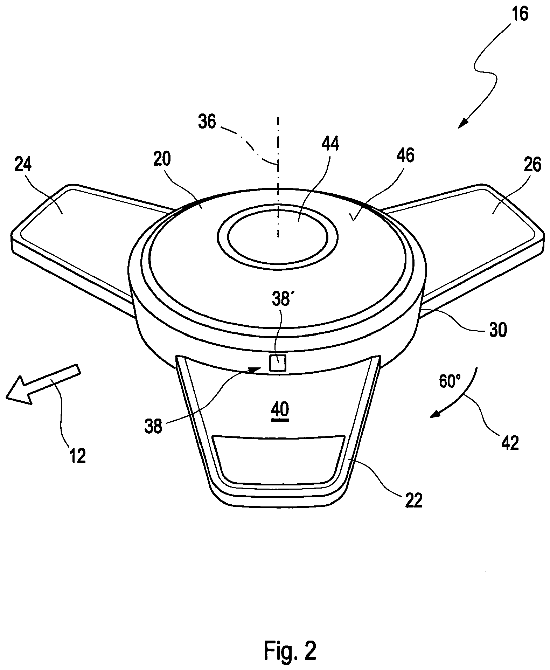

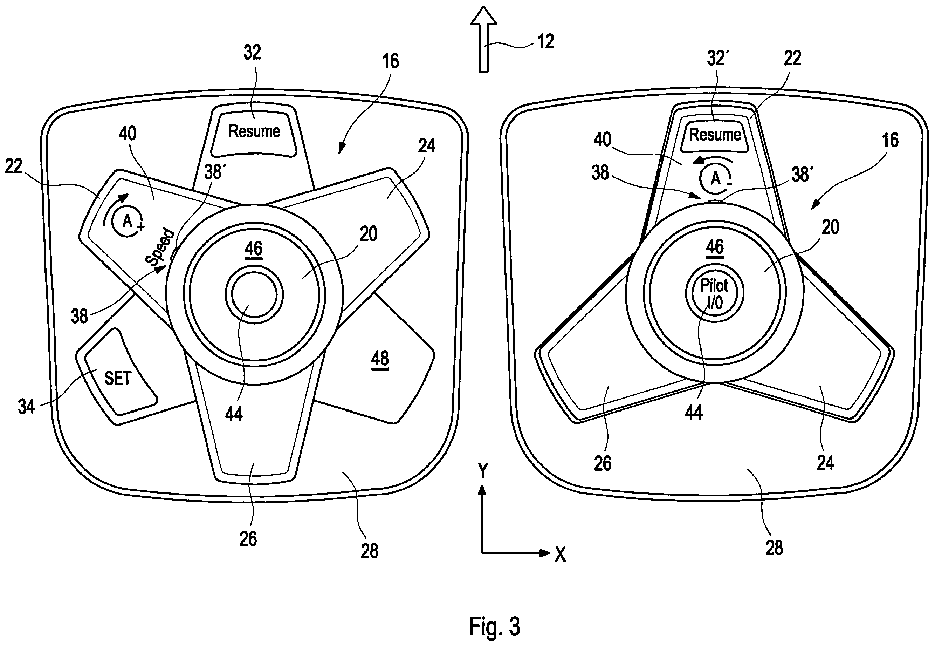

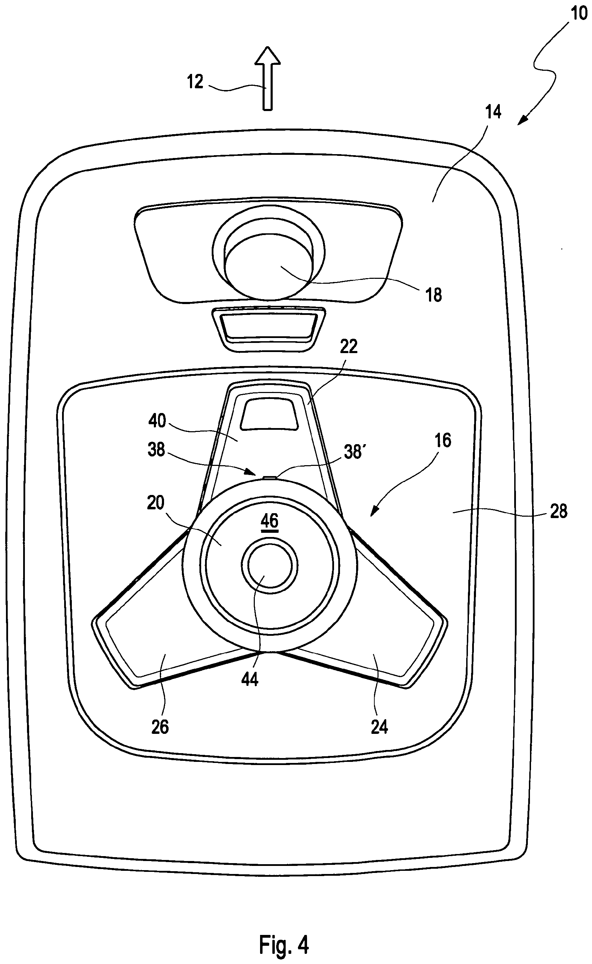

In Fig. 1 bis Fig. 4 ist eine Mittelkonsole 10 eines nicht weit dargestellten Kraftwagens gezeigt. Bei dem Kraftwagen kann es sich beispielsweise um einen elektrisch oder durch einen Verbrennungsmotor angetriebenen Personenkraftwagen handeln. Die Mittelkonsole 10 befindet sich in VorwärtsFahrtrichtung 12 des Kraftwagens gesehen neben einem Fahrersitz. In der Mittelkonsole 10 ist eine Mulde 14 ausgebildet, in welcher ein Auflageelement 16 angeordnet ist. Das Auflageelement 16 bildet eine Handballenablage 16 für einen Fahrer des Kraftwagens, wenn dieser im Fahrersitz sitzt. In Fahrtrichtung 12 vor der Handballenablage 16 kann sich eine Bedieneinrichtung 18 eines Infotainmentsystems befinden, das von dem Fahrer einfach bedient werden kann, wenn dieser seine Hand auf der Handballenablage 16 abgelegt hat. Die Handballenablage 16 weist einen kegelstumpfförmigen Grundkörper 20 auf, an welchem drei Flügelelemente 22, 24, 26 parallel zu einer Verschalung oder einem Gehäuse 28 der Mittelkonsole 10 abstehen. Das Gehäuse 28 stellt eine Innenverkleidung des Kraftwagens dar. Insgesamt weist die Handballenablage 16 durch die Flügelelemente 22, 24, 26 eine sternförmige Grundform auf. Die Kegelstumpfform des Grundkörpers 20 ergibt sich durch eine zum Gehäuse 28 hin geneigte Seitenwand 30 des Grundkörpers 20.

Die Handballenablage 16 ist Bestandteil einer Bedieneinrichtung einer Fahrerassistenzeinrichtung des Kraftwagen, durch welche der Kraftwagen während einer Fahrt in einem teilautomatischen, einem vollautomatischen und einem autonomen Assistenzmodus geführt werden kann. Im teilautomatischen Assistenzmodus kann eine Fahrgeschwindigkeitregelung und eine Abstandsregelung (ACC - Automatic-Cruising-Control) durch die Fahrerassistenzeinrichtung bereitgestellt sein. Im vollautomatischen Assistenzmodus kann durch die Fahrerassistenzeinrichtung beispielsweise in einem Stau oder bei einem Einparkmanöver durch die Fahrerassistenzeinrichtung zusätzlich auch eine Querführung des Kraftwagens ausgeführt werden. Welche Fahrmanöver die Fahrerassistenzeinrichtung dabei ausführen soll, wird dieser von dem Fahrer über eine Benutzerschnittstelle vorgegeben, die auch die Handballenablage 16 umfasst. In einem autonomen Assistenzmodus ist die Fahrerassistenzeinrichtung darüber hinaus in der Lage, selbständig zu entscheiden, welche Fahrgeschwindigkeit oder welcher Abstand zu einem vorausfahrenden Fahrzeug eingeregelt werden soll und in welchem Abstand von den Fahrbahnseitenstreifen der Kraftwagen geführt werden soll.

Für die manuelle Fahrt, d. h. bei deaktivierter Fahrerassistenzeinrichtung (hier auch als manueller Assistenzmodus bezeichnet) werden die etablierten Bedienelemente des Kraftwagens, d. h. das Lenkrad und die Pedalen, von dem Fahrer in der bekannten Weise bedient. Die Handballenablage 16 dient hierbei bei der Bedienung des Infotainmentsystems 18 ausschließlich als Handballenablage.

Zu der Bedieneinrichtung für die Fahrerassistenzeinrichtung gehören auch eine Resume-Taste 32 und eine Set-Taste 34, die in dem Gehäuse 28 eingebaut sind. Die Resume-Taste 32 befindet sich in Fahrtrichtung 12 näher zur Front des Kraftwagens. Die Set-Taste 34 befindet sich in Fahrtrichtung 12 links neben der Handballenablage 16 auf einer dem Fahrersitz zugewandten Seite der Handballenablage 16. Mit einer auf der Handballenablage 16 abgelegten Hand kann der Fahrer somit mit dem Mittelfinger die Resume-Taste 32 und mit dem Daumen die Set-Taste 34 ohne Umgreifen betätigen. Durch die Resume-Taste 32 kann ein Wechseln zwischen einem Stand-By-Betrieb und einem aktiven Betrieb der Fahrerassistenzeinrichtung im teilautomatischen Assistenzmodus ermöglicht sein. Mittels der Set-Taste 34 kann beispielsweise die aktuelle Fahrgeschwindigkeit als Sollgeschwindigkeit für die Fahrgeschwindigkeitsregelung übernommen werden.

Die Handballenablage 16 ist um eine Hochachse 36 drehbar gelagert. In der in Figur 1 gezeigten Stellung befindet sich das Fahrerassistenzsystem in einem manuellem Assistenzmodus d. h. das Fahrerassistenzsystem ist deaktiviert und der Fahrer des Kraftwagens übernimmt beim Fahren des Kraftwagens sämtliche Führaufgaben selbst.

Durch Drücken der Resume-Taste 32 kann der teilautomatische Assistenzmodus der Fahrerassistenzeinrichtung aktiviert werden. Hierdurch wird ein Tastenfeld 38 aktiviert, das dann sowohl mit dem Daumen als auch dem Zeigefinger der auf der Handballenablage 16 abgelegten Hand einfach erreicht werden kann. Das Tastenfeld 38 umfasst ein Bedienelement 38' zur Geschwindigkeitseinstellung im teilautomatischen Assistenzmodus. Das Bedienelement 38' kann beispielsweise ein Drehrad, eine monostabile Wippe oder eine Wipptaste sein. Das Tastenfeld 38 kann weitere (nicht dargestellte) Tasten für Einstellmöglichkeiten der Teilautomation aufweisen. Zusätzlich sind die Resume-Taste 32 und die Set-Taste 34 in der Teilautomation aktiviert. Schließlich ist auch eine monostabile Verstellmöglichkeit der Handballenablage 16 in Fahrtrichtung 12 zur Abstandseinstellung der automatischen Abstandsregelung möglich.

Auf dem Flügelelement 22 kann des weiteren ein Touch-Screen 40 (berührungsempfindlicher Bildschirm) eingebaut sein. Eine Anzeige des Touch-Screen 40 zeigt dem Fahrer im teilautomatischen Assistenzmodus der Fahrerassistenzeinrichtung an, welche Tasten des Bedienfelds 38 mit welcher Funktion der Fahrerassistenzeinrichtung verknüpft sind (z. B. "Speed" - Geschwindigkeit für das Bedienelement 38'). Des Weiteren zeigt ein Symbol (A+) auf dem Touch-Screen 40 dem Fahrer an, dass er durch Drehen der Handballenablage 16 um die Hochachse 36 in eine Drehrichtung 42 den Automationsgrad, d. h. den Grad der Selbständigkeit der Fahrerassistenzeinrichtung beim Führen des Kraftwagens, erhöhen kann.

Durch manuelles Drehen der Handballenablage 16 um 60 Grad in die Drehrichtung 42 wird entsprechend ein vollautomatischer Assistenzmodus aktiviert. Die Tasten 32, 34 im Gehäuse 28 der Mittelkonsole 10 bleiben dabei in ihrer Position. Nach der Drehung verdecken daher die Flügelelemente 22, 26 die Tasten 32, 34. Eines der verdeckten Tastenelemente, die Resume-Taste 32, befindet sich dabei unterhalb des Touch-Screen 40 auf dem im vollautomatischen Assistenzmodus eine Nachbildung 32' der Resume-Taste 32 angezeigt wird. Dieser Bereich der Nachbildung 32' auf dem Toch-Screen 40 ist dabei einer anderen Funktion zugeordnet, die bei der Vollautomation bereitgestellt wird. Durch die Drehung befindet sich des Weiteren das Tastenfeld 38 nicht mehr im direkten Zugriffsbereich des Fahrers. Der Fahrer kann von seiner Sitzposition im Fahrersitz aus die Tasten des Tastenfelds 38, und insbesondere die Taste 38' für die Geschwindigkeitsregelung, auch nicht mehr sehen, da die geneigte Seitenwand 30 die Tasten vom Blick des Fahrers abschirmt. Als Konsequenz verbleibt für die Vollautomation eine in der x-y-Ebene senkrecht zur Hochachse 36 bewegliches, aktiv ausgeführtes Handballenablage 16 mit lediglich einer Sensortaste 44 auf einer Ablagefläche 46 für die Hand des Fahrers. Die Handballenablage 16 ist dabei weiterhin als solche nutzbar. Die Sensortaste 44 weist eine kleinere Fläche als die gesamte Ablagefläche 46 auf, sodass durch breites auflegen der Hand auf die gesamte Ablagefläche 46 die Sensortaste 44 nicht versehentlich ausgelöst werden kann. Hierbei kann die gesamte Ablagefläche 46 als kapazitives Tastelement ausgelegt sein, bei welchem die Fläche der Sensortaste 44 separat ausgewertet werden kann. Drückt nun der Fahrer mit einem Finger ausschließlich auf die Sensortaste 44, so kann dies durch einen Vergleich der sensitiven Fläche der gesamten Ablagefläche 46 und der sensitiven Fläche der Sensortaste 44 erkannt werden.

Im vollautomatischen Assistenzmodus dient die Handballenablage 16 als Parameter- und Manöverschnittstelle der Vollautomation. Zum Einstellen eines Werts eines Fahrparameters der Fahrerassistenzeinrichtung (Sollabstand zu einem vorausfahrendem Fahrzeug, Sollfahrgeschwindigkeit, falls kein vorausfahrendes Fahrzeug vorhanden ist, eine einzuregelnde Querlage des Kraftwagens auf der momentan befahrenen Fahrspur) bzw. zum Auslösen eines Fahrmanövers (wie etwa Überholen, Fahrspurwechsel oder Einparken) wird die Handballenablage 16 in der x-y-Ebene monostabil durch den Fahrer ausgelenkt. Das Auslenken kann als Kippbewegung oder als translatorische Bewegung in der x-y-Ebene ermöglich sein. Bei der Parameter- und Manöverschnittstelle kann es sich beispielsweise um diejenige Benutzerschnittstelle handeln, die von der Anmelderin am selben Tag wie die vorliegende Patentanmeldung zum Patent angemeldet wurde.

Im Zusammenhang mit der Bedienung der Parameter-Manöverschnittstelle im vollautomatischen Assistenzmodus kann auch vorgesehen sein, der Hand des Fahrers an der Handballenablage 16 eine Kraft entgegenzusetzen, die von einem Aktor in der Mittelkonsole 10 erzeugt wird. Hierdurch kann dem Fahrer durch eine Kraft-Weg-Kennlinie und durch Auslenken der Handballenablage 16 signalisiert werden, wo sich besonders günstige oder ungünstige Werte für die einzustellenden Fahrparameter ergeben. So kann dem Fahrer beispielsweise signalisiert werden, dass er im Begriff ist, einen zu geringen Abstand zum vorausfahrendem Fahrzeug einzustellen. Dies kann kommuniziert werden, indem es dem Fahrer mittels des Aktors durch die Fahrerassistenzeinrichtung erschwert wird, die Handballenablage 16 noch weiter in die Fahrtrichtung 12 auszulenken. Kraftsenken in Kraft-Weg-Verlauf ermöglichen das haptische Anzeigen eines günstigen Werts.

In dem Gehäuse 28 kann eine Senke 48 ausgebildet sein, in welche die Flügelelemente 22, 24, 26 der Handballenablage 16 einschnappen, wenn diese in die Drehstellung für den vollautomatischen Assistenzmodus gedreht worden ist.

Auf den Toch-Screen 40 wird im vollautomatischen Assistenzmodus ein Symbol (A-) angezeigt, welches dem Fahrer anzeigt, in welche Drehrichtung er die Handballenablage 16 drehen muss, um den Automationsgrad zu verringern, d. h. wieder von den vollautomatischen in den teilautomatischen Assistenzmodus zurückzuschalten.

Im vollautomatischen Assistenzmodus ist der Toch-Screen 40 zusätzlich als berührempfindliche Bedieneinrichtung aktiviert. Auf dem Toch-Screen 40 können Funktionen vereint werden, wie zum Beispiel eine Resume-Funktion, ein Anfahrtsträger und ein Potentialträger. Mittels einem Anfahrtsträger kann sicher gestellt werden, dass nach einem automatischen Anhalten des Kraftwagens durch die Fahrerassistenzeinrichtung der Fahrer darauf gefasst ist, wenn der Kraftwagen wieder automatisch angefahren wird. Die Funktionalität eines Potentialtriggers ist in der bereits erwähnten DE 10 2010 022 433 A1 beschrieben.

Über die Sensortaste 44 in der Ablagefläche 46 oder durch Druck auf die gesamte Handballenablage 16 wird bei gegebener Verfügbarkeit ein autonomer Assistenzmodus aktiviert. Verfügbar ist dieser Assistenzmodus nur, wenn durch die Fahrerassistenzeinrichtung erkannt wird, dass diese den Kraftwagen jederzeit selbständig in einen sicheren Zustand überführen kann, beispielsweise zum Stillstand bringen kann. Beim Übergang in den autonomen Assistenzmodus wird die Handballenablage 16 mitsamt den Tasten 32, 34 in dem Gehäuse 28 der Mittelkonsole 10 kraft eines Aktors oder kraft des vom Fahrer auf die Handballenablage 16 ausgeübten Drucks versenkt. Die Handballenablage 16 kann dabei entweder bündig versenkt werden, sodass die Ablagefläche 46 bündig mit dem Gehäuse 28 abschließt, oder in einem Maße, in welchem es in der Folge weiterhin als Handballenablage verwendet werden kann.

Die Deaktivierung des autonomen Assistenzmodus erfolgt über die Sensortaste 44. Das Deaktivieren kann auch durch ein erneutes Drücken der gesamten Ablagefläche 46 ermöglicht sein. Bei einer Deaktivierung wird die Handballenablage 16 durch den Aktor oder durch eine Push-Push-Verriegelung entriegelt. Sie fährt anschließend automatisch aus dem Gehäuse 28 heraus und in eine Rückfallposition, beispielsweise in den Stand-By-Betrieb der Teilautomation.

Die Unterscheidung des Automationsgrades (manueller, teilautomatischer, vollautomatischer und autonomer Assistenzmodus) wird visuell beispielsweise über das Kombiinstrument hinter einem Lenkrad des Kraftwagens kommuniziert. Eine weitere Möglichkeit ist eine Rückmelde-Leuchtdiode, die in der Handballenablage 16 oder in dem Gehäuse 28 eingebaut sein kann.

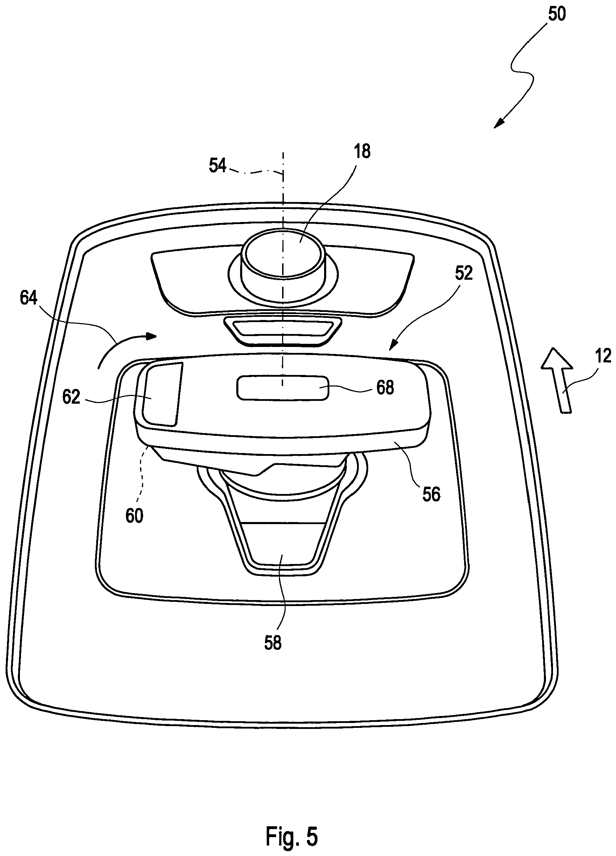

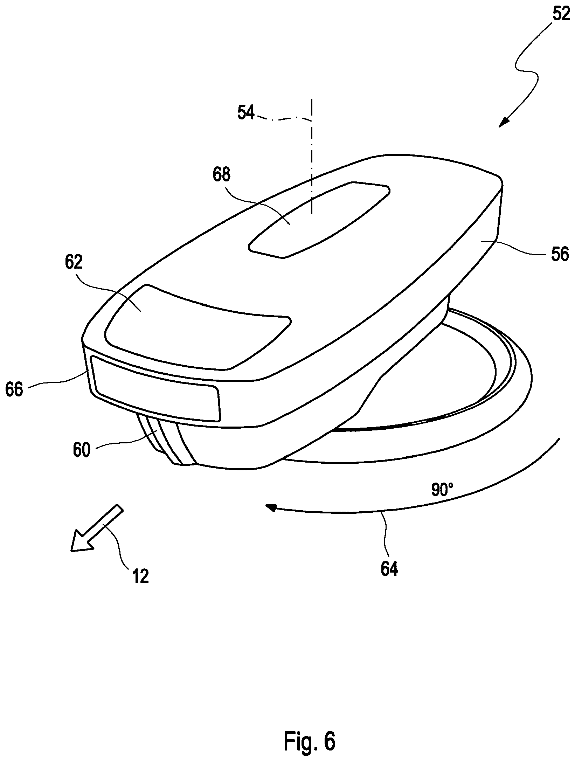

In Figur 5 und in Figur 6 ist eine Mittelkonsole 50 gezeigt, in die eine Handballenablage 52 eingebaut ist. Die Handballenablage 52 ist Bestandteil einer Bedieneinrichtung für eine Fahrerassistenzeinrichtung des Kraftwagens, in welchem sich die Mittelkonsole 50 befindet. Die Fahrerassistenzeinrichtung weist einen manuellen, einen teilautomatischen, einen vollautomatischen und einen autonomen Assistenzmodus auf, wie sie bereits im Zusammenhang mit dem vorangegangenen Beispiel beschrieben wurden. Die Handballenablage 52 ist um eine Hochachse 54 drehbar gelagert. In der in Figur 5 gezeigten Stellung ist ein barrenförmiger Grundkörper 56 der Handballenablage 52 mit seiner Längsachse senkrecht zu einer Vorwärts-Fahrrichtung 12 ausgerichtet. In dieser Stellung befindet sich die Fahrerassistenzeinrichtung in manuellen Assistenzmodus. Durch Drücken einer in Fahrtrichtung 12 vor der Handballenablage 52 befindlichen, in Figur 5 nicht erkennbaren Resume-Taste kann der teilautomatische Assistenzmodus aktiviert werden. In diesem Assistenzmodus kann ein Fahrer durch Betätigen einer Set-Taste 58, eines Wipp- oder Drehschalters 60 und der Resume-Taste Fahrparameter einer Fahrgeschwindigkeitregelung und/oder einer Abstandsregelung einstellen. Der Schalter 60 ist dabei einfach mit dem Daumen einer auf der Handballenablage 52 abgelegten Hand erreichbar. Mit der Hand kann von der Handballenablage 52 aus auch einfach eine Bedieneinrichtung 18 für ein Infotainmentsystem bedient werden. Ein Touchscreen 62 zeigt dem Fahrer an, dass er durch Drehen der Handballenablage 52 um 90 Grad in eine Drehrichtung 64 den Automationsgrad erhöhen, d. h. einen vollautomatischen Assistenzmodus aktivieren kann. Die hierdurch von der der Handballenablage 52 nach der Drehung eingenommene Stellung ist in Figur 6 gezeigt. Die Resume-Taste und die Set-Taste 58 sind dann von der Handballenablage 52 verdeckt und daher für den Fahrer nicht mehr erreichbar. Durch eine geneigte Seitenwandlung 66 ist es dem Fahrer zudem erschwert, den Schalter 60 zu erreichen, sodass die Wahrscheinlichkeit sehr gering ist, dass er diesen unbewusst zu bedienen versucht, wenn die Fahrerassistenzeinrichtung im vollautomatischen Assistenzmodus betrieben wird. Stattdessen bietet sich dem Fahrer das Toch-Screen 62 als weiteres Bedienelement an, das er in der eingenommenen Drehstellung einfach mit den Zeige- oder Mittelfinger berühren kann. Auf dem Toch-Screen 62 werden im automatischen Assistenzmodus entsprechende Berührflächen durch das Fahrerassistenzsystem angezeigt, die eine Resume-Funktion, einen Anfahrtstrigger und einen Potentialtrigger realisieren können.

Die Handballenablage 52 ist in dem teilautomatischen Assistenzmodus in Fahrtrichtung 12 monostabil auslenkbar. Durch Auslenken kann der Fahrer hierbei einen Sollabstand zu einem vorausfahrendem Fahrzeug einstellen. Im vollautomatischen Assistenzmodus ist die Handballenablage 52 in einer x-y-Ebenen senkrecht zur Hochachse 54 auslenkbar. Hierdurch kann der Fahrer weitere Fahrparameter der Fahrerassistenzeinrichtung einstellen. Durch Betätigen einer Sensortaste 68 kann der Fahrer den autonomen Assistenzmodus aktivieren und danach bei Bedarf wieder deaktivieren.

Zu den beschriebenen Beispielen sind in der folgenden Tabelle noch einmal die Bedienmöglichkeiten zusammengefasst, die dem Fahrer über die Handballenablage 16 bzw. 52 und die im Bereich der Handballenablage angeordneten Tasten in Abhängigkeit von den unterschiedlichen Assistenzmodi geboten werden.

| Manuelle Fahrt | | |
|---|---|---|
| Funktion | Bedienung | Erklärung |
| Wechsel in die Teilautomation | Taste 32 | |
| Teil-Automation | | |

| Funktion | Bedienung | Erklärung |
|---|---|---|
| Ein/Aus | Taste 32 (lang antippen) | |
| Set | Taste 32 (kurz antippen) | |
| Geschwindigkeitsregelung | Bedienelement 38', 60 | |
| Abstandsregelung | Ablage 16, 52 kurz in Fahrtrichtung 12 auslenken | |
| Resume | Taste 34 (kurz antippen) | |
| Anfahrtstrigger | Taste 34 (kurz antippen) | |
| Boost | Taste 34 (lang antippen) | |
| Wechsel in die Vollautomation | Drehung um 60 bzw. 90 | |
| Voll-Automation | | |

| Funktion | Bedienung | Erklärung |
|---|---|---|
| Anfahrttrigger | Taste 32 | |
| Potentialtrigger | | |
| Manöverschnittstelle | Bedienelementverarbeitung | |
| ON/OFF Wechsel in die Autonomie | Taste 44, 68 | Visualisierung der Verfügbarkeit von AUTO über Kombinstrumen/Headup-Display dann erst aktivierbar auf dem Rücken der Handballenablage |
| Autonomie | | |
| Abschalten ON/OFF | Taste 44, 68 (bei Fingerbetätigung) | Taste auf dem Rücken der Handballenablaqe |

Die unterschiedlichen Anordnungen und Bewegungsmöglichkeiten sowie die Zeigerwirkung der Handballenablage in Abhängigkeit von dem Automationsmodi ermöglichen eine stark systemspezifische Darstellung und Bedienbarkeit der jeweiligen Assistenzmodi. Dies erhöht die Systemtransparenz und vereinfacht die Erlernbarkeit des Automationsspektrums. Durch die Verdeckung der einzelnen Tastenfelder (durch den Überhang und die Drehlage der Handballenablage) nimmt die Komplexität des Bedienelements und der Betätigungsmöglichkeit hin zur Vollautomation sprunghaft ab.

Zusätzlich ist durch eine aktive Rückmeldung des Bedienelements im vollautomatischen Modus mittels einer Kraftrückkopplung auch während der Infotainmentbedienung die Möglichkeit der Kommunikation des Zustands der Regelstrecke Fahrzeug an den Fahrer gegeben.

Die sternförmige Gestaltung der Handballenablage 16 bringt den Vorteil mit sich, das die beiden Tasten 33, 34 in dem Gehäuse 28 zum einen ohne Umgreifen bedienbar sind, wenn sie nicht von den Flügelelementen 22, 26 verdeckt sind, und andererseits durch drehen der Handballenablage 16 verdeckt werden. Hierdurch können also in teilautomatischen Assistenzmodus zwei zusätzliche Tasten 32, 34 bereitgestellt sein, die dann nicht auf der Handballenablage 16 eingebaut werden müssen und, wo sie dann im vollautomatischen Assistenzmodus ebenfalls aus der Reichweite des Fahrers gebracht werden müssen. Entsprechend muss in die Sternform der Handballenablage 16 lediglich das Bedienelement 38 zur Geschwindigkeitsverstellung und nicht notwendigerweise ein weiteres Tastenelement integriert sein. Auch das Toch-Screen 40 muss keine weitere Tastenfunktion in teilautomatischen Assistenzmodus aufweisen.

## Patentansprüche

1. Kraftwagen mit einer Fahrerassistenzeinrichtung,
- welche dazu ausgelegt ist, den Kraftwagen selbständig während einer Fahrt des Kraftwagens zu führen, und
- welche hierbei zwischen mehreren Assistenzmodi umschaltbar ist, die sich in einem Grad der Selbständigkeit der Fahrerassistenzeinrichtung beim Führen des Kraftwagens voneinander unterscheiden, und
- welche eine Bedieneinrichtung (16, 52) mit mehreren Bedienelementen (32, 34, 38, 40, 44, 58, 60, 62, 68) aufweist, wobei die Fahrerassistenzeinrichtung dazu ausgelegt ist, in wenigstens einem der Assistenzmodi jeweilige, ein Führverhalten der Fahrerassistenzeinrichtung festlegende Fahrparameter in Abhängigkeit von einer Betätigung der Bedienelemente (32, 34, 38, 40, 44, 58, 60, 62, 68) einzustellen,
- die Bedieneinrichtung (16) als Handballenablage ausgestaltet ist, bei welcher mehrere der Bedienelemente (38, 40, 44, 60, 62, 68) an einem in einem für einen Fahrer des Kraftwagens primären Greifraum angeordneten Auflagekörper (16, 52) für eine Handfläche eines Benutzers der Bedieneinrichtung angeordnet sind, wobei
- der Auflagekörper (16, 52) manuell um eine Hochachse (36, 54) drehbar gelagert ist und die Fahrerassistenzeinrichtung dazu ausgelegt ist, den momentan aktiven Assistenzmodus in Abhängigkeit von einer Drehstellung des Auflagekörpers (16, 52) einzustellen, und wobei
- der Auflagekörper wenigstens ein Flügelelement (22, 26) aufweist, das abhängig von der Drehstellung des Auflagekörpers (16, 52) wenigstens ein Bedienelement (32) der Bedieneinrichtung verdeckt, welches neben dem Auflagekörper (16, 52) angeordnet ist,
**dadurch gekennzeichnet, dass**
auf wenigstens einem Flügelelement (22, 52) ein Bedienelement (40, 62) angeordnet ist, welches sich in derjenigen Drehstellung des Auflagekörpers (16, 52), in welcher das Flügelelement (22, 52) das neben dem Auflagekörper (16, 52) angeordnete wenigstens eine Bedienelement (32) verdeckt, über dem neben dem Auflagekörper (16, 52) angeordneten Bedienelement (32) befindet.

2. Kraftwagen nach Anspruch 1,
- wobei wenigstens eines der Bedienelemente (38; 60), welches bevorzugt ein Wippschalter (38, 60) ist, an einem in einer Ebene senkrecht zur Hochachse (16, 54) des Kraftwagens gebildeten Außenumfang des Auflagekörpers (16, 52) angeordnet ist und hierdurch eine relative Lage des Bedienelements (38; 60) zu einem Fahrersitz des Kraftwagens von der Drehstellung des Auflagekörpers (16, 52) abhängig ist.

3. Kraftwagen nach einem der vorhergehenden Ansprüche,
- wobei der Auflagekörper (16, 52) in der Innenverkleidung (10, (50) versenkbar und wieder ausfahrbar gelagert ist und das Versenken und das Ausfahren von dem Benutzer durch Drücken auf den Auflagekörper (16, 52) auslösbar ist und hierbei die Fahrerassistenzeinrichtung dazu ausgelegt ist, jeweils zusammen mit dem Versenken und dem Ausfahren den momentan aktiven Assistenzmodus zu wechseln.

4. Kraftwagen nach Anspruch 3,
- wobei der Auflagekörper (16, 52) in der versenkten Stellung durch einen Aktor oder eine Push-Push-Verriegelung gehalten ist.

5. Kraftwagen nach einem der vorhergehenden Ansprüche,
- wobei der Auflagekörper (16, 52) in zumindest einer Drehstellung durch rotatorisches Auslenken und/oder translatorisches Auslenken quer zu einer Hochachse (36, 54) des Kraftwagens auslenkbar gelagert ist und hierbei die Fahrerassistenzeinrichtung dazu ausgelegt ist, den Auflagekörper (16, 52) als Steuerhebel zum Bedienen der Fahrerassistenzeinrichtung zu betreiben.

6. Kraftwagen nach einem der vorhergehenden Ansprüche,
- wobei der Auflagekörper (16, 52) in zumindest einer Drehstellung auslenkbar gelagert ist und die Bedieneinrichtung einen Aktor aufweist, welcher dazu ausgelegt ist, an dem Auflagekörper (16, 52) eine Kraft-Weg-Kennlinie einzustellen.

7. Kraftwagen nach einem der vorhergehenden Ansprüche,
- wobei der Auflagekörper (16, 52) in zumindest einer Drehstellung auslenkbar gelagert ist und die Bedieneinrichtung einen Aktor aufweist, welcher dazu ausgelegt ist, an dem Auflagekörper (16, 52) eine Kraftrückkopplung für den Benutzer zu erzeugen.

8. Kraftwagen nach einem der vorhergehenden Ansprüche,
- wobei die Fahrerassistenzeinrichtung dazu ausgelegt ist, in einem teilautomatischen Assistenzmodus den Kraftwagen teilautomatisiert auf der Grundlage von Fahrparametern zu führen, die mittels der Bedieneinrichtung von dem Benutzer einstellbar sind, und hierbei durch Beibehalten einer entsprechenden mechanischen oder elektromechanischen Kopplung zu ermöglichen, dass ein Fahrer des Kraftwagens mittels einer Lenkhandhabe und/oder eines Pedals direkt in die Führung des Kraftwagens eingreift.

9. Kraftwagen nach einem der vorhergehenden Ansprüche,
- wobei die Fahrerassistenzeinrichtung dazu ausgelegt ist, in einem vollautomatischen Assistenzmodus den Kraftwagen durch eine selbständige Längs- und Querführung vollständig automatisiert zu führen und hierbei dem Benutzer zu ermöglichen, über eine Benutzerschnittstelle ein von der Fahrerassistenzvorrichtung durchzuführendes Fahrmanöver auszuwählen und/oder Fahrparameter eines aktuell durchgeführten Fahrmanövers einzustellen.

10. Kraftwagen nach einem der vorhergehenden Ansprüche,
- wobei die Fahrerassistenzeinrichtung dazu ausgelegt ist, in einem autonomen Assistenzmodus den Kraftwagen autonom zu führen und hierbei auch einen Wert für einen Fahrparameter eines aktuell durchgeführten Fahrmanövers selbständig festzulegen.

11. Kraftwagen nach einem der vorhergehenden Ansprüche,
- wobei bei der Fahrerassistenzeinrichtung in einem manuellen Assistenzmodus gar keine Führung des Kraftwagens, in einem teilautomatischen Assistenzmodus zumindest eine Fahrgeschwindigkeitsregelung, in einem vollautomatischen Assistenzmodus eine selbständige, aber durch den Benutzer parametrierbare Längs- und Querführung und in einem autonomen Assistenzmodus eine vollständig selbständige Führung des Kraftwagens vorgesehen ist und hierbei die Fahrerassistenzeinrichtung dazu ausgelegt ist, zwischen diesen Assistenzmodi der Reihe nach zu wechseln, falls der Benutzer ausgehend vom manuellen Assistenzmodus die folgende Abfolge von Bedienschritten ausführt: Ausfahren des Auflagekörpers aus der Innenverkleidung; Drehen des Auflagekörpers um einen vorbestimmten Winkel um dessen Hochachse; Versenken des Auflagekörpers in der Innenverkleidung.

12. Verfahren zum Betreiben eines Kraftwagens gemäß einem der Ansprüche 1 bis 11, wobei
- der in dem Kraftwagen bereitgestellte Auflagekörper (16, 52, 42, 64) in einer Innenverkleidung (10, 50) des Kraftwagens versenkbar gelagert ist, so dass seine Lage bezüglich der Innenverkleidung (10, 50) durch den Benutzer veränderbar ist,
- während einer Fahrt des Kraftwagens eine Veränderung der Lage des Auflagekörpers (16, 52) durch die Fahrerassistenzeinrichtung erfasst wird und
- in Abhängigkeit von der erfassten Veränderung ein Assistenzmodus der Fahrerassistenzeinrichtung eingestellt und zumindest eine in dem Assistenzmodus von der Fahrerassistenzeinrichtung bereitgestellte Funktionalität wenigstens einem der Bedienelemente (32, 34, 38, 40, 44, 58, 60, 62, 68) auf dem wenigstens einen Flügelelement (22, 52) des Auflagekörpers (16, 42, 52, 64) zugeordnet wird, indem die Funktionalität in Abhängigkeit von einer Bedienung des jeweiligen Bedienelements (32, 34, 38, 40, 44, 58, 60, 62, 68) ausgeführt wird.

## Claims

1. Motor vehicle with a driver assistance device,
- which is configured to guide the vehicle autonomously during a journey of the vehicle and
- which can be switched between a plurality of assistance modes which differ from each other in a degree of autonomy of the driver assistance device when guiding the vehicle and
- which comprises an operating device (16, 52) with a plurality of operating elements (32, 34, 38, 40, 44, 58, 60, 62, 68) wherein the driver assistance device is configured to set respective driving parameters defining a guide behaviour of the driver assistance device depending upon an actuation of the operating elements (32, 34, 38, 40, 44, 58, 60, 62, 68) in at least one of the assistance modes,
- the operating device (16) is designed as a wrist rest in which a plurality of operating elements (38, 40, 44, 60, 62, 68) are arranged on a support body (16, 52) for a hand surface of a user of the operating device arranged in a grip area primarily for a driver of the motor vehicle, wherein
- the support body (16, 52) is mounted so as to be rotatable manually around a vertical axis (36, 54) and the driver assistance device is configured to set the instantaneously active assistance mode depending upon a rotational position of the support body (16, 52) and wherein
- the support body comprises at least one wing element (22, 26) which conceals at least one operating element (32) of the operating device depending on the rotational position of the support body (16, 52), said operating device is arranged beside the support body (16, 52), **characterised in that** an operating element (40, 62) is arranged on at least one wing element (22, 52), said operating element is located over the operating element (32) arranged beside the support body (16, 52) in the rotational position of the support body (16, 52) in which the wing element (22, 52) conceals the at least one operating element (32) arranged beside the support body (16, 52).

2. Motor vehicle according to claim 1,
- wherein at least one of the operating elements (38; 60) which is preferably a rocker switch (38, 60) is arranged on an outer circumference of the support body (16, 52) formed in a plane perpendicular to the vertical axis (16, 54) of the motor vehicle and a relative position of the operating element (38; 60) to a driver seat of the vehicle is hereby dependent upon the rotational position of the support body (16, 52).

3. Motor vehicle according to any one of the preceding claims,
- wherein the support body (16, 52) can be retracted in the inner cladding (10, 50) and is mounted so it can be withdrawn again and the retracting and withdrawing can be triggered by the user by pressing on the support body (16, 52) and the driver assistance device is hereby configured to change the instantaneously active assistance mode together with the retracting and withdrawing.

4. Motor vehicle according to claim 3,
- wherein the support body (16, 52) is held in the retracted position by an actuator or push-push locking.

5. Motor vehicle according to any one of the preceding claims,
- wherein the support body (16, 52) is mounted so it can be deflected in at least one rotational position by way of rotatory deflection and/or translational deflection transverse to a vertical axis (36, 54) of the motor vehicle and the driver assistance device is hereby configured to actuate the support body (16, 52) as a control lever to operate the driver assistance device.

6. Motor vehicle according to any one of the preceding claims,
- wherein the support body (16, 52) is mounted so it can be deflected in at least one rotational position and the operating device comprises an actuator which is configured to set a force-path characteristic curve at the support body (16, 52).

7. Motor vehicle according to any one of the preceding claims,
- wherein the support body (16, 52) is mounted so it can be deflected in at least one rotational position and the operating device comprises an actuator which is configured to generate a force feedback for the user at the support body (16, 52).

8. Motor vehicle according to any one of the preceding claims,
- wherein the driver assistance device is configured to guide the motor vehicle in a partly-automated manner based on drive parameters in a partly-automated assistance mode, said drive parameters being settable by the user by means of the operating device and by maintaining a corresponding mechanical or electromagnetic coupling to hereby enable a driver of the motor vehicle to directly engage the guidance of the motor vehicle by means of a steering lever and/or a pedal.

9. Motor vehicle according to any one of the preceding claims,
- wherein the driver assistance device is configured to guide the motor vehicle in a fully-automated manner by way of independent longitudinal and transverse guidance in a fully-automated assistance mode and to hereby enable the user to select a driving manoeuvre to be performed by the driver assistance device via a user interface and/or to set driving parameters of a currently performed driving manoeuvre.

10. Motor vehicle according to any one of the preceding claims,
- wherein the driver assistance device is configured to guide the motor vehicle in an autonomous manner in an autonomous assistance mode and also to hereby independently define a value for a driving parameter of a currently performed driving manoeuvre.

11. Motor vehicle according to any one of the preceding claims,
- wherein with the driver assistance device in a manual assistance mode, no guidance of the motor vehicle at all is provided, in a partly-automated assistance mode at least one driving speed control is provided, in a fully-automated assistance mode independent, longitudinal and transverse guidance parameterisable by the user is provided and in an autonomous assistance mode fully independent guidance of the motor vehicle is provided and the driver assistance device is configured to change between these assistance modes successively if the user performs the following sequence starting from the manual assistance mode: extending the support body from the inner cladding; rotating the support body by a predetermined angle around its vertical axis; retracting the support body in the inner cladding.

12. Method for actuating a motor vehicle according to any one of claims 1 to 11, wherein
- the support body (16, 52, 42, 64) provided in the motor vehicle is mounted so it can be retracted in an inner cladding (10, 50) of the motor vehicle such that its position in relation to the inner cladding (10, 50) can be changed by the user,
- during a journey of the motor vehicle a change of the position of the support body (16, 52) is detected by the driver assistance device and
- depending on the detected change, an assistance mode of the driver assistance device is set and at least one functionality provided by the driver assistance device in the assistance mode is assigned to at least one of the operating elements (32, 34, 38, 40, 44, 58, 60, 62, 68) on the at least one wing element (22, 52) of the support body (16, 42, 52, 64) by performing the functionality depending on an operation of the respective operating element (32, 34, 38, 40, 44, 58, 60, 62, 68).

## Revendications

1. Véhicule automobile avec un dispositif d'assistance au conducteur,
- qui est conçu pour conduire le véhicule automobile automatiquement pendant un trajet du véhicule automobile, et
- qui est alors commutable entre plusieurs modes d'assistance qui se distinguent les uns des autres par le degré d'autonomie du dispositif d'assistance au conducteur lors de la conduite du véhicule automobile, et
- qui comporte un dispositif de commande (16, 52) avec plusieurs éléments de commande (32, 34, 38, 40, 44, 58, 60, 62, 68), le dispositif d'assistance au conducteur étant conçu pour régler, dans au moins l'un des modes d'assistance, des paramètres de conduite respectifs, spécifiant un comportement de conduite du dispositif d'assistance au conducteur, en fonction d'un actionnement des éléments de commande (32, 34, 38, 40, 44, 58, 60, 62, 68),
- dans lequel le dispositif de commande (16) est conçu comme un repose-paumes tel que plusieurs des éléments de commande (38, 40, 44, 60, 62, 68) sont agencés au niveau d'un corps d'appui (16, 52), agencé dans un espace de préhension primaire pour un conducteur du véhicule automobile, pour une paume de main d'un utilisateur du dispositif de commande,
- dans lequel le corps d'appui (16, 52) est logé de manière à pouvoir être tourné manuellement autour d'un axe vertical (36, 54) et le dispositif d'assistance au conducteur est conçu pour régler le mode d'assistance momentanément actif en fonction d'une position en rotation du corps d'appui (16, 52)
- et dans lequel le corps d'appui comporte au moins un élément à ailette (22, 26) qui, en fonction de la position en rotation du corps d'appui (16, 52), masque au moins un élément de commande (32) du dispositif de commande qui est agencé à côté du corps d'appui (16, 52),
**caractérisé en ce qu'**un élément de commande (40, 62) est agencé sur au moins un élément à ailette (22, 52), lequel élément de commande se trouve, dans la position en rotation du corps d'appui (16, 52) dans laquelle l'élément à ailette (22, 52) masque l'au moins un élément de commande (32) agencé à côté du corps d'appui (16, 52), au-dessus de l'élément de commande (32) agencé à côté du corps d'appui (16, 52).

2. Véhicule automobile selon la revendication 1,
- dans lequel au moins l'un des éléments de commande (38 ; 60), qui est de préférence un interrupteur à bascule (38 ; 60), est agencé au niveau d'une périphérie extérieure du corps d'appui (16, 52) qui est formée dans un plan perpendiculairement à l'axe vertical (16, 54) du véhicule automobile et une position relative de l'élément de commande (38; 60) par rapport à un siège de conducteur du véhicule automobile est ainsi dépendante de la position en rotation du corps d'appui (16, 52).

3. Véhicule automobile selon l'une des revendications précédentes,
- dans lequel le corps d'appui (16, 52) est logé de manière à pouvoir être enfoncé dans l'habillage intérieur (10, 50) et en être de nouveau sorti et l'enfoncement ainsi que la sortie peuvent être déclenchés par l'utilisateur via une pression sur le corps d'appui (16, 52) et le dispositif d'assistance au conducteur est alors conçu pour changer le mode d'assistance momentanément actif conjointement avec l'enfoncement et la sortie.

4. Véhicule automobile selon la revendication 3,
- dans lequel le corps d'appui (16, 52) est maintenu dans la position enfoncée par un actionneur ou par un verrouillage push-push.

5. Véhicule automobile selon l'une des revendications précédentes,
- dans lequel le corps d'appui (16, 52) est logé de manière à pouvoir, dans au moins une position en rotation, être sorti via une sortie par rotation et/ou une sortie par translation transversalement à un axe vertical (36, 54) du véhicule automobile et le dispositif d'assistance au conducteur est ainsi conçu pour exploiter le corps d'appui (16, 52) comme levier de commande destiné à la commande du dispositif d'assistance au conducteur.

6. Véhicule automobile selon l'une des revendications précédentes,
- dans lequel le corps d'appui (16, 52) est logé de manière à pouvoir être sorti dans au moins une position en rotation et le dispositif de commande comporte un actionneur qui est conçu pour régler au niveau du corps d'appui (16, 52) une courbe caractéristique force-course.

7. Véhicule automobile selon l'une des revendications précédentes,
- dans lequel le corps d'appui (16, 52) est logé de manière à pouvoir être sorti dans au moins une position en rotation et le dispositif de commande comporte un actionneur qui est conçu pour produire au niveau du corps d'appui (16, 52) une réaction de force destinée à l'utilisateur.

8. Véhicule automobile selon l'une des revendications précédentes,
- dans lequel le dispositif d'assistance au conducteur est conçu pour, dans un mode d'assistance partiellement automatique, conduire le véhicule automobile de manière partiellement automatisée sur la base de paramètres de conduite qui sont réglables par l'utilisateur au moyen du dispositif de commande et pour permettre ainsi, en conservant un couplage mécanique ou électromécanique correspondant, qu'un conducteur du véhicule automobile intervienne directement dans la conduite du véhicule automobile au moyen d'une manette de direction et/ou d'une pédale.

9. Véhicule automobile selon l'une des revendications précédentes,
- dans lequel le dispositif d'assistance au conducteur est conçu pour, dans un mode d'assistance complètement automatique, conduire de manière complètement automatisée le véhicule automobile via un guidage longitudinal et transversal autonome et pour permettre ainsi à l'utilisateur de choisir par l'intermédiaire d'une interface d'utilisateur une manoeuvre de conduite à effectuer par le dispositif d'assistance au conducteur et/ou de régler des paramètres de conduite d'une manoeuvre de conduite actuellement effectuée.

10. Véhicule automobile selon l'une des revendications précédentes,
- dans lequel le dispositif d'assistance au conducteur est conçu pour, dans un mode d'assistance autonome, conduire le véhicule automobile de manière autonome et de spécifier alors aussi une valeur pour un paramètre de conduite d'une manoeuvre de conduite actuellement effectuée.

11. Véhicule automobile selon l'une des revendications précédentes,
- dans lequel, lorsque le dispositif d'assistance au conducteur est dans un mode d'assistance manuel, il n'est prévu aucune conduite du véhicule automobile et, dans un mode d'assistance partiellement automatique, il est prévu au moins une régulation de vitesse et, dans un mode d'assistance complètement automatique, il est prévu un guidage longitudinal et transversal automatique mais paramétrable par l'utilisateur et, dans un mode d'assistance autonome, il est prévu un guidage complètement automatisé du véhicule automobile et le dispositif d'assistance au conducteur est ainsi conçu pour changer dans l'ordre entre ces modes d'assistance si l'utilisateur exécute à partir du mode d'assistance manuel la séquence suivante d'étapes de commande : sortie du corps d'appui hors de l'habillage intérieur; rotation du corps d'appui d'un angle prédéterminé autour de son axe vertical ; enfoncement du corps d'appui dans l'habillage intérieur.

12. Procédé pour faire fonctionner un véhicule automobile selon l'une des revendications 1 à 11, dans lequel
- le corps d'appui (16, 52, 42, 64) disponible dans le véhicule automobile est logé de manière à pouvoir être enfoncé dans un habillage intérieur (10, 50) du véhicule automobile de telle sorte que sa position par rapport à l'habillage intérieur (10, 50) est modifiable par l'utilisateur,
- pendant un trajet du véhicule automobile, une modification de la position du corps d'appui (16, 52) est détectée par le dispositif d'assistance au conducteur et
- en fonction de la modification détectée, un mode d'assistance du dispositif d'assistance au conducteur est réglé et au moins une fonctionnalité fournie par le dispositif d'assistance au conducteur dans le mode d'assistance est associée à au moins l'un des éléments de commande (32, 34, 38, 40, 44, 58, 60, 62, 68) sur l'au moins un élément à ailette (22, 52) du corps d'appui (16, 42, 52, 64), la fonctionnalité étant exécutée en fonction d'une commande de l'élément de commande (32, 34, 38, 40, 44, 58, 60, 62, 68) respectif.
